# EUROPÄISCHE PATENTSCHRIFT

(11) **EP 1 982 858 B1**
(45) Veröffentlichungstag und Bekanntmachung des Hinweises auf die Patenterteilung: **23.12.2009**
(21) Anmeldenummer: 08006939.6
(22) Anmeldetag: 08.04.2008
(51) Int. Cl.: B60J 7/14

(54) **Umwandelbares Dach fuer einen Personenkraftwagen**
Convertible roof for a passenger motor vehicle
Toit escamotable pour un véhicule de transport de personnes

(30) Priorität: 17.04.2007 DE 102007018017
(43) Veröffentlichungstag der Anmeldung: 22.10.2008
(73) Patentinhaber: Magna Car Top Systems GmbH, 74321 Bietigheim-Bissingen (DE)
(72) Erfinder: Papendorf, Marcus, Dipl.-Ing., 74357 Bönnigheim (DE); Bruder, Gernot, Dr.-Ing., 76131 Karlsruhe (DE)

(56) Entgegenhaltungen:
- EP-A- 1 688 289
- DE-A1-102006 057 967
- DE-U1- 29 620 468
- GB-A- 2 364 281

## Beschreibung

Die Erfindung bezieht sich auf ein umwandelbares Dach für einen Personenkraftwagen nach dem Oberbegriff des Patentanspruchs 1.

Ein bekanntes verstellbares Fahrzeugdach, EP 1 361 966 B1, umfasst ein vorderes Dachteil und ein hinteres Dachteil, die zwischen einer Schließstellung und einer Ablagestellung bewegbar sind. Hierfür sind eine Dachkinematik und ein als Hydraulikzylinder ausgebildetes Stellelement vorgesehen, welche Dachkinematik als Viergelenk dargestellt ist. Zwischen einem Drehlager an der Karosserie und der Dachkinematik ist ein Federelement eingebaut, das die Dachkinematik in jeder Endposition des Fahrzeugdachs in Richtung der gegenüberliegenden Endpositionen beaufschlagt. Die Dachkinematik ist mit zwei karosserieseitig abgestützten Lenkern und einem dazwischen liegenden C-Säulen-Lenker versehen. Dabei ist ein erster Lenker als Antriebslenker und ein zweiter Lenker mit dem Federelement verbunden.

Aus der DE 100 21 333 C1 geht ein Cabriolet-Fahrzeug mit einem mehrteiligen Fahrzeugdach hervor, das unter Vermittlung einer Mehrgelenkkinematik zwischen einer Schließstellung sowie einer Ablagestellung und umgekehrt verstellbar ist. An der Mehrgelenkkinematik greift eine Spannfeder an, die besagte Mehrgelenkkinematik bei Betätigung eines Bowdenzugs aus einer Totpunktlage löst, damit das Dach bzw. seine Dachteile in eine Schließstellung verbringbar sind.

In der DE 869 159 wird ein verstellbares Klappverdeck für ein Personen aufnehmbares Kraftfahrzeug mit einem kinematischen Verstellmechanismus gezeigt, der von einem fahrzeugfesten Motor angetrieben wird. Der Verstellmechanismus besitzt einen gelenkig an einer Karosserie gelagerten Hauptspriegel, der unter Zwischenschaltung eines mehrteiligen Antriebsmechanismus von dem Motor zur Verstellung des Klappverdecks zwischen dessen Öffnungs- und Schließposition beaufschlagt wird.

Es ist Aufgabe der Erfindung ein umwandelbares Dach für einen Personenkraftwagen zu schaffen, zu dessen Betätigung einfache technische Mittel geeignet sind, die sich bei guter Funktion aufwandsökonomisch realisieren lassen.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Zusammenwirken der Dachelemente des umwandelbaren Dachs mit dem Koppellenker und der Abstützung des Federelements sowohl an dem vorderen Dachlenker wie auch unter Zwischenschaltung des Lenkergetriebes an dem hinteren Dachlenker eine herausragende Steuerung der Dachelemente sichergestellt ist. Dabei setzt das Lenkergetriebe zwischen den Dachlenkern der beiden Dachelemente in der besonderen technischen Ausprägung Maßstäbe für die Technologie beweglicher Dächer im Kraftfahrzeugbau. Auch deshalb weil die Betätigung des Dachs bzw. der Dachelemente von der Schließstellung in die Offenstellung und umgekehrt einfach ist. So bewirkt das Federelement in Verbindung mit dem Lenkergetriebe, dass das Dach bzw. die Dachelemente in sämtlichen Stellungen von Schließstellung in Offenstellung und in die andere Richtung eine Art statischen Gleichgewichtszustand einnehmen, was dazu beiträgt, dass sich das Dach manuell leichtgängig bzw. mit relativ kleinen Aktuatoren, vorzugsweise kostengünstige und wenig Bauraum beanspruchende Elektromotoren niedriger Leistung und folglich hohem Bedienkomfort, betätigen lässt. Schließlich sind sämtliche Bauteile des umwandelbaren Dachs mit vertretbarem Aufwand herstellbar und in einen Personenkraftwagen integrierbar.

In der Zeichnung wird ein Ausführungsbeispiel der Erfindung gezeigt, das nachstehend näher erläutert wird.

Es zeigen
Fig. 1 eine Teilseitenansicht eines Personenkraftwagens mit einem umwandelbaren Dach in einer Schließstellung,
Fig. 2 eine Ansicht entsprechend Fig. 1, jedoch das Dach in einer ersten Zwischenstellung,
Fig. 3 eine Ansicht entsprechend Fig. 1, jedoch das Dach in einer zweiten Zwischenstellung,
Fig. 4 eine Ansicht entsprechend Fig. 1, jedoch das Dach in einer dritten Zwischenstellung,
Fig. 5 eine Ansicht entsprechend Fig.1, jedoch das Dach in einer Offenstellung.

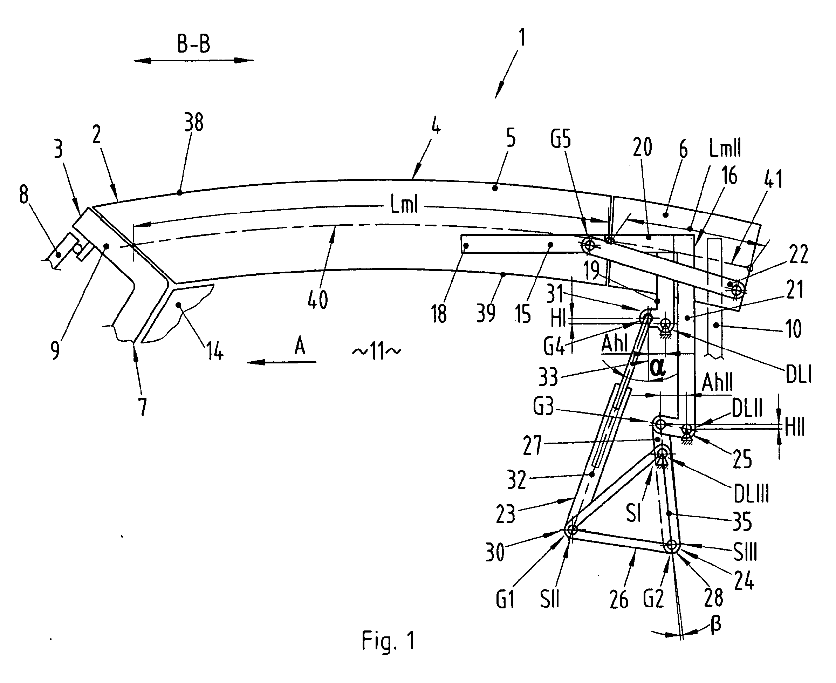

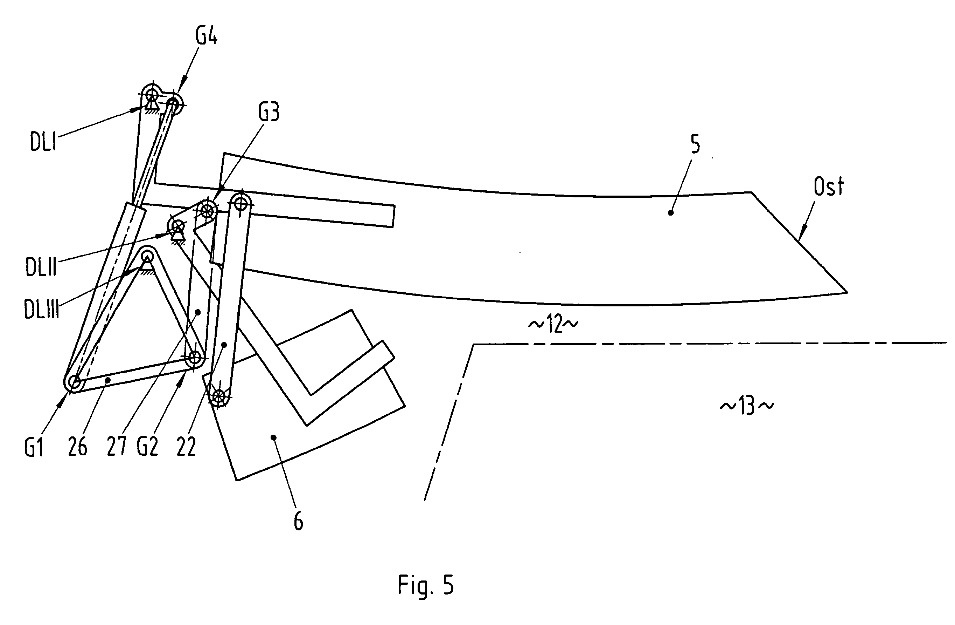

Ein Personenkraftwagen 1 umfasst in dem dargestellten Bereich eine Aufbau 2 mit einer Windschutzscheibenvorrichtung 3 und einem Dach 4, das in Fahrtrichtung A gesehen ein vorderes Dachelement 5 und ein hinteres Dachelement 6 aufweist. Die Windschutzscheibenvorrichtung 3 besitzt einen Windschutzscheibenrahmen 7, der eine Windschutzscheibe 8 aufnimmt und mit einem oberen quer zur Fahrzuglängsrichtung B-B verlaufenden Rahmenabschnitt 9 an das vordere Dachelement 5 anschließt. Das hintere Dachelement 6 umgibt Abschnittsweise eine aufrecht stehende Heckseibe 10, die schwenk- und/oder höhenverstellbar ausgebildet sein kann. Das Dach 4 ist umwandelbar ausgeführt und von einer Schließstellung Schst -Fig. 1- in eine abgesenkte Offenstellung Ost - Fig. 5 - und vice versa verstellbar, wobei das Dach 4 in der Schließstellung Schst einen Fahrgastraum 11 überspannt und in der Offenstellung Ost in einem Raum 12 abgelegt ist, der benachbart einem Triebwerkraum 13 angeordnet ist. Der Fahrgastraum 11 ist über an Längsseiten des Personenkraftwagens 1 vorgesehene Türen zugänglich, wovon in Fig. 1 lediglich eine Türscheibe 14 angedeutet ist.

Das vordere Dachelement 5 ist mit einem vorderen Dachlenker 15 und das hintere Dachelement 6 ist mit einem hinteren Dachlenker 16 versehen, welche Dachlenker 5 und 6 Bestandteil einer Dachbewegungseinrichtung 17 sind. Der vordere Dachlenker 15 ist mit einem ersten etwa horizontal verlaufenden Dachlenkerabschnitt 18 am vorderen Dachelement 5 fest angebracht und mit einem zweiten aufrechten Dachlenkerabschnitt 19 an einem ersten Drehlager DLI des Aufbaus 2 angelenkt. Und der hintere Dachlenker 16 ist mit einem ersten horizontal ausgerichteten Dachlenkerabschnitt 20 am hinteren Dachelement 6 befestigt und mit einem zweiten aufrechten Dachlenkerabschnitt 21 an einem zweiten Drehlager DLII am Aufbau 2 schwenkbar gelagert. Darüber hinaus ist zwischen dem vorderen Dachelement 5 und dem hinteren Dachelement 6 ein Koppellenker 22 wirksam.

Ein Federelement 23 steht in Wirkverbindung mit dem vorderen Dachlenker 15 und unter Zwischenschaltung eines Lenkergetriebes 24 mit dem hinteren Dachlenker 16, und zwar derart, dass das Federelement 23 das Dach 4 aus der Schließstellung Schst in die Offenstellung Ost und aus der Offenstellung Ost in die Schließstellung Schst zu bewegen sucht. Dabei nehmen das Dach 4 bzw. die Dachelemente 4 und 5 eine Art statischen Gleichgewichtszustand ein, so dass die zuletzt genannten manuell oder mit eine Aktuator in Gestalt eines Elektromotors 25 in sämtlichen möglichen Stellungen von der Schließstellung Schst in die Offenstellung Ost funktionsgerecht bewegbar sind. Der Elektromotor 25 kann am Lenkergetriebe 24 z.B. am zweiten Drehlager DLII oder einer anderen geeigneten Position angeordnet werden.

Das Lenkergetriebe 24 umfasst einen Umlenkhebel 26 und einen Steuerhebel 27. Der Umlenkhebel 26 ist über ein drittes Drehlager DLIII am Aufbau 2 gelagert und mittels eines ersten Gelenks G1 mit dem Federelement 23 sowie eines zweiten Gelenks G2 mit einem ersten Ende 28 des Steuerhebels 27 verbunden. Ein zweites Ende 29 des Steuerhebels 27 arbeitet über ein drittes Gelenk G3 mit dem hinteren Dachlenker 16 zusammen. Ein erstes Ende 30 des Federelements 23 ist an dem besagten ersten Gelenk G1 gelagert; ein zweites Ende 31 an einem vierten Gelenk G4 des vorderen Dachlenkers 15.

Nach Fig.1 liegt in der Schließstellung Schst des Dachs 4 und in Fahrtrichtung A gesehen das viert Gelenk G4 vor dem ersten Drehlager DLI und das dritte Gelenk G3 vor dem zweiten Drehlager DLII, was durch die horizontalen Abstände Ahl und Ahll veranschaulicht ist. Dabei ist eine Mittellängsachse 32 des Federelements 23 aufrecht oder leicht geneigt angeordnet. Im Ausführungsbeispiel verläuft die Mittellängsachse 32 entgegen der Fahrtrichtung A geneigt, und sie schließt einen spitzen Winkel α mit einer Senkrechten 33 ein. Das vierte Gelenk G4, das die Mittellängsachse 32 des Federelements 23 schneidet, liegt oberhalb des ersten Drehlagers DLI -HI-, ebenso ist das dritte Gelenk G3 oberhalb des zweiten Drehlagers DLII -HII- angeordnet.

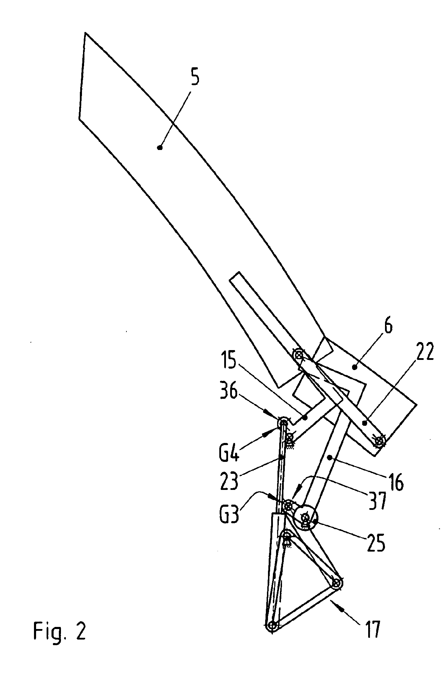

Das dritte Drehlager DLIII, das erste Gelenk G1 und das zweite Gelenk G2 des Umlenkhebels 26 werden durch Seitenschnittpunkte SI, SII und SIII eines Dreiecks 34 bestimmt. Das zweite Gelenk G2, das dritte Drehlager DLIII und das dritte Gelenk G3 liegen -Fig.1- auf einer gemeinsamen Geraden 35. Dabei verläuft die Gerade 35 aufrecht oder mit geringer Neigung -Winkel β- in Fahrtrichtung A. Das vierte Gelenk G4 ist an einer Abwinkelung 36 des vorderen Dachlenkers 15 vorgesehen; das dritte Gelenk G3 an einer zweiten Abwinkelung 37 des hinteren Dachlenkers 16 -Fig. 2-.

In Fahrtrichtung A gesehen ist eine mittlere Länge Lml des vorderen Dachelementes 5, gemessen entlang einer zwischen einer oberen Dachlinie 38 und einer unteren Dachlinie 39 verlaufenden mittleren vorderen Dachlinie 40 größer als die Länge Lmll einer entsprechend mittleren hinteren Dachlinie 41 des hinteren Dachelements 6. Dabei kann die Länge Lml vier- bis fünfmal größer sein als die Länge Lmll.

Der Koppelenker 22 wirkt über eine fünftes Gelenk G5 und ein sechstes Gelenke 6 mit dem vorderen Dachelement 5 und dem hinteren Dachelement 6 zusammen. Das fünfte Gelenk G5 und das sechste Gelenk G6 sind jeweils benachbart von rückwärtigen Bereichen Brl und Brll des vorderen Dachelements 5 und des hinteren Dachelements 6 angeordnet, wobei der Koppellenker 22 in etwa horizontal bzw. relativ flach ausgerichtet ist.

In Fig. 1 nimmt das Dach 4 die Schließstellung Schst ein und das Federelement 23 beaufschlagt den Dachlenker 15 des vorderen Dachelements 16 und stützt sich am Umlenkhebel 26 ab, der die Federkraft des besagten Federelements 23 über den Steuerlenker 27 auf den hinteren Lenkerhebel 16 des hintern Dachteils 6 überträgt. Der hintere Lenkerhebel 16 wird bei dieser Gegebenheit ebenfalls mit Federkraft in Richtung Offenstellung Ost beaufschlagt. Anders ausgedrückt, die Federkraft des Federelements sucht beide Dachteile 5 und 6 zu bewegen.

Fig.2 gibt wieder, dass das Dach 4 ca. zwanzig Prozent geöffnet ist und der wirksame Hebelarm des Federelements 23 zum vorderen Dachelement 5 und zum hinteren Dachelement 6 kleiner wird; dementsprechend verringert sich auch die erforderliche Antriebskraft.

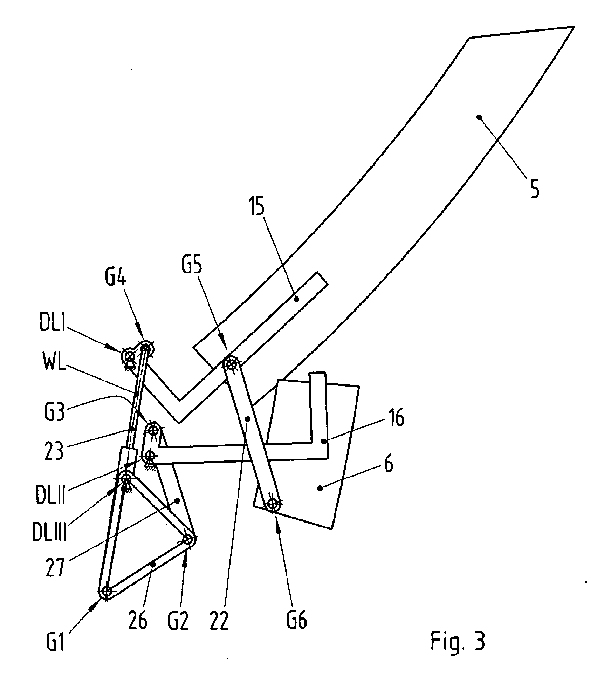

In Fig. 3 ist das Dach 4 etwa sechzig Prozent geöffnet und die Wirklinie WL des Federelements 23 zum vorderen Dachelement 5 und zum hinteren Dachelement 6 hat sich umgekehrt. Jetzt bremst das Federelement 23 beide Dachelement 5 und 6 ab, dergestalt, dass letztere ihre vorgesehene stabile Lage beibehalten und nicht in unerwünschter Weise sich in die Offenstellung Ost bewegen. Dabei überfährt der Steuerlenker 27 das zweite Drehlager DLII des hinteren Dachlenkers 16.

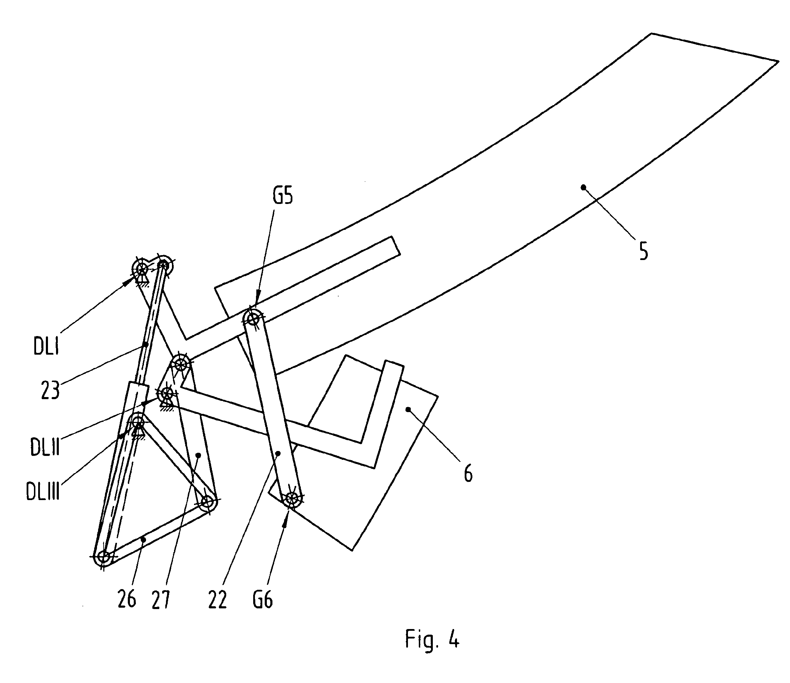

Die Fig. 4 veranschaulicht, dass das Dach 4 ungefähr achtzig Prozent geöffnet ist, und die Fig. 5 zeigt, dass sich das Dach 4 in der Offenstellung Ost befindet. In dieser Stellung übt das Federelement 23 einen maximalen wirksamen Hebelarm aus, und zwar damit die größte Kraft, hervorgerufen durch Gewicht und Lage des Dachs 4, ausgeglichen wird.

## Patentansprüche

1. Umwandelbares Dach für einen Personenkraftwagen, das vorzugsweise in Fahrtrichtung des einen Aufbau aufweisenden Personenkraftwagens gesehen ein vorderes Dachelement (5) und ein hinteres Dachelement (6) umfasst, die mit einem vorderen Dachlenker (15) und einem hinteren Dachlenker (16) einer Dachbewegungseinrichtung versehen sind und aus einer einen Fahrgastraum abdeckenden Schließstellung (Schst) in eine in einem Raum des Aufbaus versenkte Offenstellung und vice versa bewegbar sind, welche Dachbewegungseinrichtung mit einem Federelement (23) zusammenarbeitet, das das Dach (4) aus der Schließstellung (Schst) in die Offenstellung zu bewegen sucht, **dadurch gekennzeichnet, dass** der vordere Dachlenker (15) und der hintere Dachlenker (16) einerseits fest mit dem vorderen Dachelement (5) bzw. hinteren Dachelement (6) verbunden sind und andererseits an ersten Drehlagern (DLI) und zweiten Drehlagern (DLII) des Aufbaus (2) schwenkbeweglich gelagert sind, wobei zwischen vorderem Dachelement (5) und hinterem Dachelement (6) ein Koppellenker (22) wirksam ist und das Federelement (23) sich zum einen am vorderen Dachlenker (15) und zum anderen unter Zwischenschaltung eines Lenkergetriebes (24) der Dachbewegungseinrichtung (17) am hinteren Dachlenker (16) abstützt.

2. Umwandelbares dach nach Anspruch 1, **dadurch gekennzeichnet, dass** das Lenkergetriebe (24) einen Umlenkhebel (26) und einen Steuerhebel (27) umfasst.

3. Umwandelbares Dach nach den Ansprüchen 1 und 2, **dadurch gekennzeichnet, dass** der Umlenkhebel (26) über ein drittes Drehlager (DLIII) mit dem Aufbau (2), über ein erstes Gelenk (G1) mit dem Federelement (23) und über eine zweites Gelenk (G2) mit einem ersten Ende (23) des Steuerhebels (27) verbunden ist, dessen zweites Ende (29) mittels eines dritten Gelenks (G3) mit dem hinteren Dachlenker (16) zusammenarbeitet.

4. Umwandelbares Dach nach einem oder mehreren der vorangehenden Ansprüche, **dadurch gekennzeichnet, dass** das Federelement (23) über ein erstes Ende (30) an dem ersten Gelenk (G1) und über ein zweites Ende (31) mit einem vierten Gelenk (G4) am vorderen Dachlenker (15) angreift.

5. Umwandelbares Dach nach Anspruch 4, **dadurch gekennzeichnet, dass** in der Schließstellung (Schst) des Dachs (4) und in Fahrtrichtung (A) gesehen das vierte Gelenk (G4) vor dem ersten Drehlager (DLI) liegt.

6. Umwandelbares Dach nach Anspruch 3, **dadurch gekennzeichnet, dass** das in der Schließstellung (Schst) des Dachs (4) und in Fahrtrichtung (A) gesehen dritte Gelenk (G3) vor dem zweiten Drehlager (DLII) liegt.

7. Umwandelbares Dach nach einem oder mehreren der vorangehenden Ansprüche, **dadurch gekennzeichnet, dass** in Fahrtrichtung (A) gesehen eine Mittellängsachse (32) des Federelements (23) in etwa aufrecht stehend oder leicht geneigt angeordnet ist.

8. Umwandelbares Dach nach Anspruch 7, **dadurch gekennzeichnet, dass** die Mittellängsachse (32) des Federelements (23) entgegen der Fahrtrichtung (A) geneigt ist und einen spitzen Winkel (α) mit einer Senkrechten (33) einschließt.

9. Umwandelbares Dach nach einem oder mehreren der vorangehenden Ansprüche, **dadurch gekennzeichnet, dass** in Fahrtrichtung (A) gesehen das vierte Gelenk (G4) oberhalb des ersten Drehlagers (DLI) liegt.

10. Umwandelbares Dach nach einem oder mehreren der vorangehenden Ansprüche 3 bis 9, **dadurch gekennzeichnet, dass** das dritte Gelenk (G1) oberhalb des zweiten Drehlagers (DLII) liegt.

11. Umwandelbares Dach nach einem oder mehreren der vorangehenden Ansprüche 3 bis 10, **dadurch gekennzeichnet, dass** die Lage des dritten Drehlagers (DLIII), des ersten Gelenks (G1) und des zweiten Gelenks (G2) des Umlenkhebels (26) durch Seitenschnittpunkte (SI, SII und SIII) eines Dreiecks (34) bestimmt wird.

12. Umwandelbares Dach nach einem oder mehreren der vorangehenden Ansprüche 3 bis 11, **dadurch gekennzeichnet, dass** das zweite Gelenk (G2), das dritte Drehlager (DLIII) und das dritte Gelenk (G3) im Wesentlichen auf einer gemeinsamen Geraden (35) liegen.

13. Umwandelbares dach nach Anspruch 12, **dadurch gekennzeichnet, dass** die Gerade (35) aufrecht oder mit geringer Neigung, vorzugsweise in Fahrtrichtung (A) verläuft.

14. Umwandelbares dach nach einem oder mehreren der vorangehenden Ansprüche 4 bis 13, **dadurch gekennzeichnet, dass** das vierte Gelenk (G4) an einer ersten Abwinkelung (36) des vorderen Dachlenkers (15) angeordnet ist.

15. Umwandelbares Dach nach einem oder mehreren der vorangehenden Ansprüche 3 bis 14, **dadurch gekennzeichnet, dass** das dritte Gelenk (G3) an einer zweiten Abwinkelung (37) des hinteren Dachlenkers (16) angeordnet ist.

16. Umwandelbares Dach nach Anspruch 1, **dadurch gekennzeichnet, dass** in Fahrtrichtung (A) gesehen eine mittlere Länge Lml des vorderen Dachelements (5) größer ist als eine mittlere Länge (LmII) des hinteren Dachelements (6).

17. Umwandelbares dach nach Anspruch 16, **dadurch gekennzeichnet, dass** die mittlere Länge (LmI) des vorderen Dachelements (5) in etwa vier- bis fünfmal größer ist als die mittlere Länge (LmII) des hinteren Dachelements (6).

18. Umwandelbares dach nach einem oder mehreren der vorangehenden Ansprüche, **dadurch gekennzeichnet, dass** der Koppellenker (22) über ein fünftes Gelenk (G5) und ein sechstes Gelenk (G6) mit dem vorderen Dachelement (5) und hinteren Dachelement (6) zusammenwirkt.

19. Umwandelbares Dach nach Anspruch 18, **dadurch gekennzeichnet, dass** das fünfte Gelenk (G5) und das sechste Gelenk (G6) jeweils benachbart von rückwärtigen Bereichen (Brl und BrII) des vorderen Dachelements (5) und des hinteren Dachelements (6) angeordnet sind.

20. Umwandelbares Dach nach den Ansprüche 18 und 19, **dadurch gekennzeichnet, dass** der Koppellenker (22) horizontal bzw. relativ flach ausgerichtet ist.

21. Umwandelbares Dach nach einem oder mehreren der vorangehenden Ansprüche, **dadurch gekennzeichnet, dass** das Dach (4) bzw. die Dachelemente (5 und 6) manuell betätigbar sind.

22. Umwandelbares Dach nach einem oder mehreren der vorangehenden Ansprüche, **dadurch gekennzeichnet, dass** das Dach (4) bzw. die Dachelemente (5 und 6) mittels eines Aktuators betätigbar sind.

23. Umwandelbares Dach nach Anspruch 22, **dadurch gekennzeichnet, dass** der Aktuator am Lenkergetriebe (24) angreift.

24. Umwandelbares Dach nach Anspruch 23, **dadurch gekennzeichnet, dass** der Aktuator bspw. durch einen Elektromotor (25) mit relativ niedriger Leistung gebildet wird.

## Claims

1. Convertible roof for a passenger motor vehicle which, preferably as seen in the direction of travel of the passenger motor vehicle which has a body, comprises a front roof element (5) and a rear roof element (6) which are provided with a front roof link (15) and a rear roof link (16) of a roof-moving device and can be moved from a closed position (Schst) covering a passenger compartment into an open position in which they are retracted in a space in the body, and vice versa, said roof-moving device cooperating with a spring element (23) which attempts to move the roof (4) from the closed position (Schst) into the open position, **characterized in that** the front roof link (15) and the rear roof link (16) are respectively connected fixedly at one end to the front roof element (5) and rear roof element (6) and are mounted pivotably at the other end of first rotary bearings (DLI) and second rotary bearings (DLII) of the body (2), with a coupling link (22) being effective between the front roof element (5) and rear roof element (6), and the spring element (23) being supported at one end on the front roof link (15) and at the other end, with the interconnection of a link mechanism (24) of the roof-moving device (17), on the rear roof link (16).

2. Convertible roof according to Claim 1, **characterized in that** the link mechanism (24) comprises a reversing lever (26) and a control lever (27).

3. Convertible roof according to Claims 1 and 2, **characterized in that** the reversing lever (26) is connected via a third rotary bearing (DLII) to the body (2), via a first joint (G1) to the spring element (23) and via a second joint (G2) to a first end (23) of the control lever (27), the second end (29) of which cooperates with the rear roof link (16) by means of a third joint (G3).

4. Convertible roof according to one or more of the preceding claims, **characterized in that** the spring element (23) acts via a first end (30) on the first joint (G1) and via a second end (31) on the front roof link (15) by means of a fourth joint (G4).

5. Convertible roof according to Claim 4, **characterized in that**, in the closed position (Schst) of the roof (4) and as seen in the direction of travel (A), the fourth joint (G4) is located in front of the first rotary bearing (DLI).

6. Convertible roof according to Claim 3, **characterized in that**, in the closed position (Schst) of the roof (4) and as seen in the direction of travel (A), the third joint (G3) is located in front of the second rotary bearing (DLII).

7. Convertible roof according to one or more of the preceding claims, **characterized in that** a central longitudinal axis (32) of the spring element (23) is arranged such that it is approximately upright or slightly inclined, as seen in the direction of travel (A).

8. Convertible roof according to Claim 7, **characterized in that** the central longitudinal axis (32) of the spring element (23) is inclined counter to the direction of travel (A) and encloses an acute angle (α) with a perpendicular (33).

9. Convertible roof according to one or more of the preceding claims, **characterized in that** the fourth joint (G4) is located above the first rotary bearing (DLI), as seen in the direction of travel (A).

10. Convertible roof according to one or more of the preceding claims 3 to 9, **characterized in that** the third joint (G1) is located above the second rotary bearing (DLII).

11. Convertible roof according to one or more of the preceding claims 3 to 10, **characterized in that** the position of the third rotary bearing (DLIII) of the first joint (G1) and of the second joint (G2) of the reversing lever (26) is determined by lateral intersecting points (SI, SII and SIII) of a triangle (34).

12. Convertible roof according to one or more of the preceding Claims 3 to 11, **characterized in that** the second joint (G2), the third rotary bearing (DLIII) and the third joint (G3) are located substantially on a common straight line (35).

13. Convertible roof according to Claim 12, **characterized in that** the straight line (35) runs upright or with a slight inclination, preferably in the direction of travel (A).

14. Convertible roof according to one or more of the preceding claims 4 to 13, **characterized in that** the fourth joint (G4) is arranged on a first angled portion (36) of the front roof link (15).

15. Convertible roof according to one or more of the preceding claims 3 to 14, **characterized in that** the third joint (G3) is arranged on a second angled portion (37) of the rear roof link (16).

16. Convertible roof according to Claim 1, **characterized in that**, as seen in the direction of travel (A), a central length (LmI) of the front roof element (5) is larger than a central length (LmII) of the rear roof element (6).

17. Convertible roof according to Claim 16, **characterized in that** the central length (LmI) of the front roof element (5) is approximately 4 to 5 times larger than the central length (LmII) of the rear roof element (6).

18. Convertible roof according to one or more of the preceding claims, **characterized in that** the coupling link (22) interacts with the front roof element (5) and rear roof element (6) via a fifth joint (G5) and a sixth joint (G6).

19. Convertible roof according to Claim 18, **characterized in that** the fifth joint (G5) and the sixth joint (G6) are each arranged adjacent to rear regions (BrI and BrII) of the front roof element (5) and of the rear roof element (6).

20. Convertible roof according to Claims 18 and 19, **characterized in that** the coupling link (22) has a horizontal or relatively flat orientation.

21. Convertible roof according to one or more of the preceding claims, **characterized in that** the roof (4) and the roof elements (5 and 6) can be actuated manually.

22. Convertible roof according to one or more of the preceding claims, **characterized in that** the roof (4) and the roof elements (5 and 6) can be actuated by means of an actuator.

23. Convertible roof according to Claim 22, **characterized in that** the actuator acts on the link mechanism (24).

24. Convertible roof according to Claim 23, **characterized in that** the actuator is formed, for example, by a relatively low-powered electric motor (25).

## Revendications

1. Toit escamotable pour un véhicule de transport de personnes qui comprend, de préférence vu dans la direction de conduite du véhicule de transport de personnes présentant une carrosserie, un élément de toit avant (5) et un élément de toit arrière (6), qui sont pourvus d'un bras oscillant de toit avant (15) et d'un bras oscillant de toit arrière (16) d'un dispositif de déplacement du toit et qui peuvent être déplacés d'une position de fermeture (Schst) recouvrant l'habitacle du véhicule dans une position d'ouverture enfoncée dans un espace de la carrosserie et vice versa, lequel dispositif de déplacement du toit coopérant avec un élément de ressort (23), qui tend à déplacer le toit (4) de la position de fermeture (Schst) dans la position d'ouverture, **caractérisé en ce que** le bras oscillant de toit avant (15) et le bras oscillant de toit arrière (16) sont connectés d'une part fixement à l'élément de toit avant (5) ou à l'élément de toit arrière (6), et d'autre part sont montés de manière déplaçable par pivotement sur des premiers paliers pivotants (DLI) et des deuxièmes paliers pivotants (DLII) de la carrosserie (2), un bras oscillant d'accouplement (22) agissant entre l'élément de toit avant (5) et l'élément de toit arrière (6), et l'élément de ressort (23) s'appuyant d'une part contre le bras oscillant de toit avant (15) et d'autre part contre le bras oscillant de bras arrière (16) en interposant une transmission à bras oscillant (24) du dispositif de déplacement du toit (17).

2. Toit escamotable selon la revendication 1, **caractérisé en ce que** la transmission à bras oscillant (24) comprend un levier de déviation (26) et un levier de commande (27).

3. Toit escamotable selon les revendications 1 et 2, **caractérisé en ce que** le levier de déviation (26) est connecté par le biais d'un troisième palier pivotant (DLIII) à la carrosserie (2), par le biais d'une première articulation (G1) à l'élément de ressort (23) et par le biais d'une deuxième articulation (G2) à une première extrémité (23) du levier de commande (27), dont la deuxième extrémité (29) coopère au moyen d'une troisième articulation (G3) avec le bras oscillant de toit arrière (16).

4. Toit escamotable selon l'une quelconque ou plusieurs des revendications précédentes, **caractérisé en ce que** l'élément de ressort (23) vient en prise par le biais d'une première extrémité (30) avec la première articulation (G1) et par le biais d'une deuxième extrémité (31) ayant une quatrième articulation (G4) avec le bras oscillant de toit avant (15).

5. Toit escamotable selon la revendication 4, **caractérisé en ce que**, vu dans la position de fermeture (Schst) du toit (4) et dans la direction de conduite (A), la quatrième articulation (G4) est située avant le premier palier pivotant (DLI).

6. Toit escamotable selon la revendication 3, **caractérisé en ce que** la troisième articulation (G3) vue dans la position de fermeture (Schst) du toit (4) et dans la direction de conduite (A), est située avant le deuxième palier pivotant (DLII).

7. Toit escamotable selon l'une quelconque ou plusieurs des revendications précédentes, **caractérisé en ce que**, vu dans la direction de conduite (A), un axe médian longitudinal (32) de l'élément de ressort (23) est disposé approximativement verticalement ou de manière légèrement inclinée.

8. Toit escamotable selon la revendication 7, **caractérisé en ce que** l'axe médian longitudinal (32) de l'élément de ressort (23) est incliné à l'encontre de la direction de conduite (A) et forme un angle aigu (α) avec une verticale (33).

9. Toit escamotable selon l'une quelconque ou plusieurs des revendications précédentes, **caractérisé en ce que**, vu dans la direction de conduite (A), la quatrième articulation (G4) se situe au dessus du premier palier pivotant (DLI).

10. Toit escamotable selon l'une quelconque ou plusieurs des revendications précédentes 3 à 9, **caractérisé en ce que** la troisième articulation (G1) est située au-dessus du deuxième palier pivotant (DLII).

11. Toit escamotable selon l'une quelconque ou plusieurs des revendications précédentes 3 à 10, **caractérisé en ce que** la position du troisième palier pivotant (DLIII), de la première articulation (G1) et de la deuxième articulation (G2) du levier de déviation (26) est déterminée par des points d'intersection latéraux (SI, SII, SIII) d'un triangle (34).

12. Toit escamotable selon l'une quelconque ou plusieurs des revendications précédentes 3 à 11, **caractérisé en ce que** la deuxième articulation (G2), le troisième palier pivotant (DLIII) et la troisième articulation (G3) se situent essentiellement sur une droite commune (35).

13. Toit escamotable selon la revendication 12, **caractérisé en ce que** la droite (35) s'étend verticalement ou avec une légère inclinaison, de préférence dans la direction de conduite (A).

14. Toit escamotable selon l'une quelconque ou plusieurs des revendications précédentes 4 à 13, **caractérisé en ce que** la quatrième articulation (G4) est disposée sur un premier coudage (36) du bras oscillant de toit avant (15).

15. Toit escamotable selon l'une quelconque ou plusieurs des revendications précédentes 3 à 14, **caractérisé en ce que** la troisième articulation (G3) est disposée sur un deuxième coudage (37) du bras oscillant de toit arrière (16).

16. Toit escamotable selon la revendication 1, **caractérisé en ce que**, vu dans la direction de conduite (A), une longueur moyenne Lml de l'élément de toit avant (5) est supérieure à une longueur moyenne (Lmll) de l'élément de toit arrière (6).

17. Toit escamotable selon la revendication 16, **caractérisé en ce que** la longueur moyenne (Lml) de l'élément de toit avant (5) est approximativement quatre à cinq fois plus grande que la longueur moyenne (Lmll) de l'élément de toit arrière (6).

18. Toit escamotable selon l'une quelconque ou plusieurs des revendications précédentes, **caractérisé en ce que** le bras oscillant d'accouplement (22) coopère par le biais d'une cinquième articulation (G5) et d'une sixième articulation (G6) avec l'élément de toit avant (5) et l'élément de toit arrière (6).

19. Toit escamotable selon la revendication 18, **caractérisé en ce que** la cinquième articulation (G5) et la sixième articulation (G6) sont à chaque fois disposées à côté de régions arrière (Brl et Brll) de l'élément de toit avant (5) et de l'élément de toit arrière (6).

20. Toit escamotable selon les revendications 18 et 19, **caractérisé en ce que** le bras oscillant d'accouplement (22) est orienté horizontalement ou relativement à plat.

21. Toit escamotable selon l'une quelconque ou plusieurs des revendications précédentes, **caractérisé en ce que** le toit (4) ou les éléments de toit (5 et 6) peuvent être actionnés manuellement.

22. Toit escamotable selon l'une quelconque ou plusieurs des revendications précédentes, **caractérisé en ce que** le toit (4) ou les éléments de toit (5 et 6) peuvent être actionnés au moyen d'un actionneur.

23. Toit escamotable selon la revendication 22, **caractérisé en ce que** l'actionneur vient en prise avec la transmission à bras oscillant (24).

24. Toit escamotable selon la revendication 23, **caractérisé en ce que** l'actionneur est formé par exemple par un moteur électrique (25) avec une puissance relativement faible.
